# EUROPEAN PATENT APPLICATION

(11) **EP 2 324 698 A1**
(43) Date of publication of application: **25.05.2011**
(21) Application number: 09176332.6
(22) Date of filing: 18.11.2009
(51) Int. Cl.: A01G 9/14

(54) **Device for securing plastics and fabrics in greenhouses**

(71) Applicant: Baby Plant, S.L., 30140 Santoñera Murcia (ES)
(72) Inventor: Anton Cayuelas, Juan Antonio, 30140, Santomera (Madrid) (ES)
(74) Representative: PROPI, S.L.

(57) **Abstract**

Device for securing plastics and fabrics in greenhouses, for greenhouses with a series of longitudinal and transversal profiles which make up the structure of the greenhouse, which comprises three pieces (1, 2, 3), preferably plastics, a first piece (1) of larger cross-section than the other two pieces (2, 3), is pressed to fit on a suitably shaped metal profile (4), whereon the plastic of the greenhouse has been previously disposed, so that the plastic is trapped between the profile (4) and the piece (1); a second piece (2) of smaller cross-section than the first is pressed to fit on the first piece (1) where the fabric has previously been placed; and a third piece (2) is also pressed to fit exactly on the upper free section of the second piece (2), this third piece (3) being the one that fastens the array of the device.

## Description

Device for securing plastics and fabrics in greenhouses.

### OBJECT OF THE INVENTION

The present invention relates to a device for securing plastics and fabrics in greenhouses, constituted by a three-piece array, preferably plastics, and by a metal profile of a suitable shape for the plastic pieces which achieves an effective fastening without damaging the plastics or the fabrics of the greenhouse, attaining a longer useful life of the bindings and a lower cost as a consequence of its design and constitution.

### BACKGROUND OF THE INVENTION

The securing device for greenhouses disclosed in utility model ES 1001701 is known, which is constituted by a clamp made of metallic material whose cross-section is preferably circular, which takes a generally circular shape with an aperture of approximately 86°, wherein the circular shape is adopted by two generally parallel clamp portions, connected transversally at one end and open at the other end, wherein the aforementioned ends feature angular finishes and the transversal connecting area is equipped with a rise wherein a longitudinal greenhouse wire can be housed, while the reinforced tubes of said greenhouse are inserted into the two portions of said device.

### DESCRIPTION OF THE INVENTION

The invention proposed consists of a securing device for plastics and fabrics in greenhouses, mainly for multi-tunnel greenhouses which are constituted by a series of longitudinal and transversal profiles fastened to the greenhouse structure. The entire frame of these greenhouses is covered by a plastic or fabric sheet, or by both, of normally transparent cover, fastened to each and every one of the profiles for the correct arrangement thereof.

The device of the invention is connected to each one of the longitudinal and transversal profiles, so that thanks to its design and components it is placed inside of said profiles, permitting the tightening and fastening of the plastic or fabric of the greenhouse.

The device is constituted by three preferably plastic pieces and a metal profile of suitable design, where the outermost plastic piece is inserted inside the profile of the greenhouse structure by pressing it in; profiles of a suitable shape for the plastic pieces designed so that the plastic and the fabric of the greenhouse are housed between the profile and the device, even permitting the tightening thereof. Disposed in the interior of the external piece is an intermediate piece, which is inserted by pressing it inside the external piece in the same manner that this has been inserted inside the profile of the greenhouse structure. Before inserting each one of the pieces on others, the plastic or the fabric which one wishes to fasten or tighten is placed, so that said plastic or fabric is fastened by the array of the device. And lastly, one final piece is also inserted on the intermediate piece by pressing it in, in order to secure the whole array and prevent the plastic or fabric from accidently coming undone.

The method for securing the fabric and the plastic of the greenhouse consists of placing the plastic on the interior of the metal profile of the greenhouse structure, and subsequently inserting the outermost plastic piece inside the profile by pressing it in. Next, the fabric is inserted inside the outermost plastic piece, and the intermediate piece is pressed in. Lastly, in order to adjust the securing system, the final plastic piece is inserted into the interior of the intermediate piece. This insertion is also done by pressing it on the intermediate piece, and remains tightly fitted thereto, leaving the system well-secured.

In order to extract this last securing piece, and to remove the fabric or plastic of the greenhouse, there is an internal orifice which passes through the entire length of said final piece, permitting the extraction thereof through a wire, sharp piece or such like.

### DESCRIPTION OF THE DRAWINGS

In order to complete the description which is being carried out and with the purpose of helping towards a better understanding of the characteristics of the invention, in accordance with a preferred example of embodiment thereof, a set of drawings is attached as an integral part of said description, wherein the following, in an illustrative and non-limitative character, has been represented:

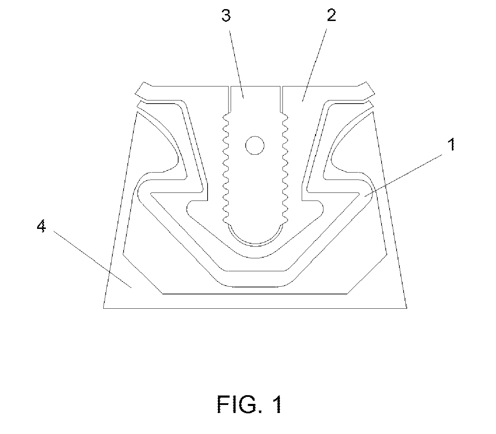

- Figure 1: shows a view of the cross-section of each one of the component pieces of the device of the invention, where the plastic of the greenhouse would be inserted between the metal profile (4) and the piece (1), and the fabric of the greenhouse would be inserted between the piece (1) and the piece (2), the piece (3) exerting pressure for the securing of the array.

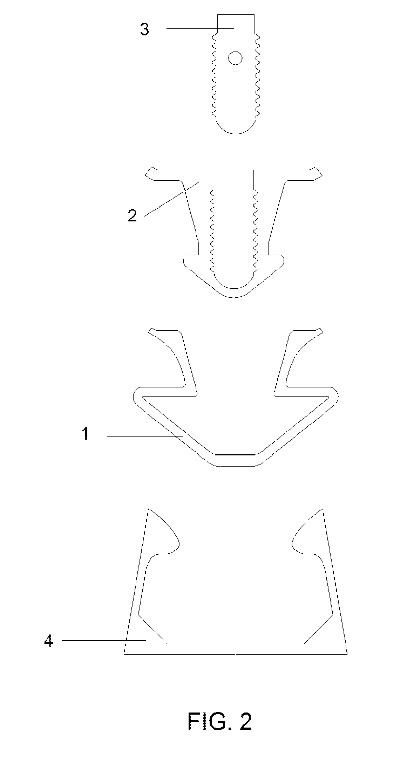

- Figure 2: shows a view of the profiles of each one of the components of the device of the invention, in an exploded view to view each one of them clearly.

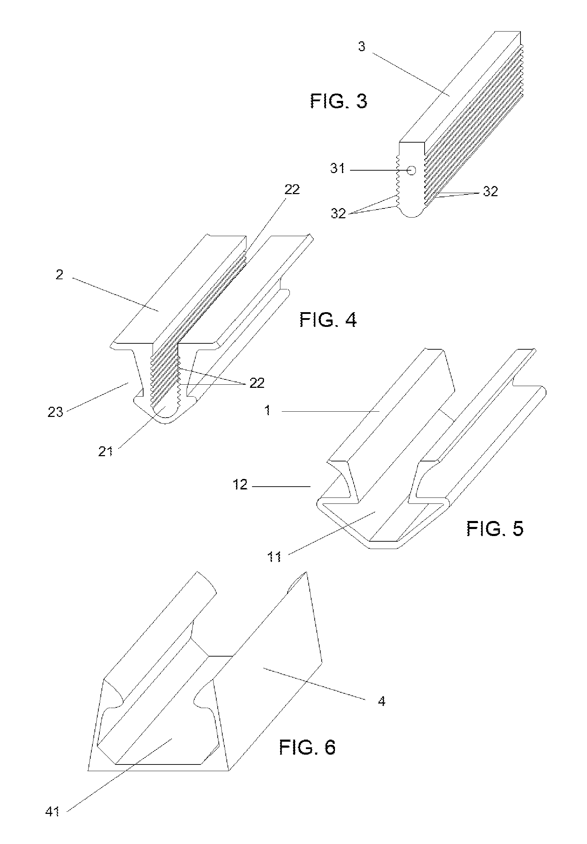

- Figure 3: shows a perspective view of the piece (3) of the invention.
- Figure 4: shows a perspective view of the piece (2) of the invention.
- Figure 5: shows a perspective view of the piece (1) of the invention.
- Figure 6: shows a perspective view of the aluminium profile (4) of the invention.

### PREFERRED EMBODIMENT OF THE INVENTION

The proposed invention consists of a device for securing plastics and fabrics in greenhouses, mainly for multi-tunnel greenhouses, of the type which are constituted by a series of longitudinal and transversal profiles fastened to the greenhouse structure.

The frame of the greenhouse is covered by a plastic sheet and a fabric sheet, normally transparent, secured to each and every one of the profiles for their correct arrangement. There can be a single fabric or plastic of the greenhouse, or it can be constituted by several layers, one of fabric and one of plastic, or other combinations. The device disclosed by the invention is especially designed for greenhouses with more than one layer covering the frame, as it permits several layers to be secured.

The device of the invention is connected to each one of the longitudinal and transversal profiles, so that it is placed inside of said profiles, permitting the tightening and securing of the plastic and the fabric of the greenhouse.

The device for securing plastics and fabrics in greenhouses disclosed comprises three pieces (1, 2, 3), preferably plastic, which are pressed to fit inside each other and an aluminium profile (4) of defined cross-section, according to the characteristics of these three pieces (1, 2, 3).

A first piece (1) of greater cross-section than the other two pieces (2, 3), is pressed to fit on a suitably shaped metal profile (4), whereon the plastic of the greenhouse has been previously disposed, so that the plastic is trapped between the profile (4) and the piece (1). This first piece (1) has a transversal profile in the form of an arrow, of greater dimension that the profile of the second piece (2) and surrounds the second piece (2) pressed to fit on the interior (11) of the first piece (1). The external part (12) of said piece (1) will be pressed to fit, once the plastic of the greenhouse has been inserted, on the internal part (41) of the aluminium profile (4).

A second piece (2) of smaller cross-section than the first is pressed to fit on the first piece (1) where the fabric has previously been placed. It has a transversal profile in the form of a hollow arrow, where it receives the third piece (3) in the internal part (21) of the teeth (21), while the external part (23) is pressed to fit, once the fabric of the greenhouse is ready, on the interior (11) of the first piece (1 ).

A third piece (3) is also pressed to fit exactly on the upper free section of the second piece (2), this third piece being the one that fastens the array of the device so that it does not move or so that fabric or plastic is not accidentally removed. This third piece (3) has an orifice (31) which passes through the entire length of said piece (3), so that it permits the insertion of an element for the removal thereof, when one desires to free the fabric or plastic of the greenhouse. It has a series of lateral teeth (32) which tightly fit together with teeth (22) of the internal part of the second piece (2).

The aluminium profile (4) has a shape so that it fits together with the exterior (12) of the piece (1). Thus, its internal part (41) tightly houses the exterior (12) of the piece (1), inserting the plastic of the greenhouse between the profile (4) and the piece (1).

## Claims

1. Device for securing plastics and fabrics in greenhouses, mainly for greenhouses of the type which are constituted by a series of longitudinal and transversal profiles which make up the structure of the greenhouse itself, **characterized in that** it comprises three pieces (1, 2, 3), preferably plastics, a first piece (1) of larger cross-section than the other two pieces, is pressed to fit on a suitably shaped metal profile (4), whereon the plastic of the greenhouse has been previously disposed, so that the plastic is trapped between the profile (4) and the piece (1); a second piece (2) of smaller cross-section than the first is pressed to fit on the first piece (1) where the fabric has previously been placed; and a third piece (3) is also pressed to fit exactly on the upper free section of the second piece (2), this third piece (3) being the one that fastens the array of the device so that it does not move or so that fabric or plastic is not accidentally removed.

2. Device for securing plastics and fabrics in greenhouses, according to claim 1, **characterized in that** the third piece (3) has an orifice (31) which passes through the entire length of said piece (3), so that it permits the insertion of an element for the removal thereof.

3. Device for securing plastics and fabrics in greenhouses, according to previous claims, **characterized in that** the third piece (3) has a series of lateral teeth (32) which tightly fit together with teeth (22) of the internal part of the second piece (2).

4. Device for securing plastics and fabrics in greenhouses, according to previous claims, **characterized in that** the second piece (2) has a transversal profile in the form of a hollow arrow, where it receives the third piece (3) in the internal part (21) of the teeth (21), while the external part (23) is pressed to fit, once the fabric of the greenhouse is ready, on the interior (11) of the first piece (1 ).

5. Device for securing plastics and fabrics in greenhouses, according to previous claims, **characterized in that** the first piece (1) has a transversal profile in the form of an arrow, of greater dimension that the profile of the second piece (2) and surrounds it, the second piece (2) being pressed to fit on the interior (11) of the first piece (1), and where the external part (12) of said piece (1) will be pressed to fit, once the plastic of the greenhouse has been inserted, on the internal part (41) of the aluminium profile (4).

6. Device for securing plastics and fabrics in greenhouses, according to previous claims, **characterized in that** the internal part (41) of the aluminium profile (4) has a shape so that it fits together with the piece (1), inserting the plastic of the greenhouse between the profile (4) and the piece (1).
